# EUROPEAN PATENT APPLICATION

(11) **EP 1 970 663 A1**
(43) Date of publication of application: **17.09.2008**
(21) Application number: 07706386.5
(22) Date of filing: 05.01.2007
(51) Int. Cl.: F42B 3/12, F42B 3/13

(54) **IGNITION DEVICE, GAS GENERATION DEVICE FOR AIRBAG, AND GAS GENERATION DEVICE FOR SEATBELT PRETENSIONER**

(30) Priority: 06.01.2006 JP 2006001548
(71) Applicant: Nipponkayaku Kabushikikaisha, Tokyo 102-8172 (JP)
(72) Inventor: MAEDA, Shigeru, Hyogo 679-2123 (JP); MUKUNOKI, Hirotaka, Hyogo 679-2123 (JP); KUBO, Dairi, Hyogo 679-2123 (JP)
(74) Representative: Katérle, Axel
(86) International application number: PCT/JP2007/050039
(87) International publication number: WO 2007/078000

(57) **Abstract**

The invention provides an ignition device having a high shielding-performance from electro-magnetic wave noise and the like, while being compact in size and enabling electric current securely to flow through electric circuits built in the ignition device. The ignition device includes a metal cup and a metal header for holding a plurality of electrode pins respectively insulated and closing the opening of the cup to integrate the header in the cup, and further includes, in the cup, ignition charge, an ASIC, a capacitor, and a heating element. The ASIC is electrically connected to the electrode pins, the capacitor and the heating element, respectively, and the heating element abuts against the ignition charge. The header is provided on its outer periphery with a metal flange for fixing the header to an installation body of the ignition device.

## Description

### TECHNICAL FIELD

This invention relates to an ignition device to be installed in a gas generator or the like used in a safety device for a car such as an air bag and the like, and more particularly to a gas generator with such an ignition device installed therein for an air bag and a gas generator with the ignition device for a seat belt pretensioner.

### BACKGROUND ART

A variety of electric ignition devices have been developed as ignition devices for gas generators for inflating air bags equipped in cars.
Such an ignition device usually has metal pins for electrically connecting to the external, and a heating element at the other ends of the metal pins for igniting an explosive.
As examples of such a heating element, heating elements incorporated in a printed sub-circuit have been known as disclosed in a patent document 1 and a patent document 2 corresponding to the patent document 1.

On the other hand, moreover, it has been envisioned that an air bag system is linked to a local area network (LAN) so that ignition of an ignition device is controlled by communication.
In this case, it is necessary to locate electric circuits in the ignition device for the communication and ignition as described in a patent document 3.

With the ignition device constructed as described above, therefore, it is required to provide means for causing electric current to flow through the electric circuits built in the ignition device.
In a patent document 4, for example, disclosed is a structure of an electric circuit substrate fixed to electrode pins of a header by means of soldering or the like.

Patent document 1: Specification of French Patent Application Opened No. 2,704,944
Patent document 2: Specification of United States Patent No. 5,544,585
Patent document 3: Official Gazette of Japanese Patent No. 3,294,582
Patent document 4: Specification of European Patent Application Opened No. 1,256,775

### DISCLOSURE OF THE INVENTION

### TASK TO BE SOLVED BY THE INVENTION

In order to prevent any erroneous ignition, an ignition device incorporating electric circuits therein for communication and ignition need only be able to shield the internal electric circuits from external electro-magnetic noise and electro-magnetic induction.

In the case of the ignition device of the prior art incorporating therein electric circuits, after the circuits have been previously constructed on a substrate and connected to electrode pins of a header, the circuits and the substrate must be molded with a resin as described in the patent document 4.
However, particularly the resin molding under a condition already connected to a header is seriously lower in productivity as compared with the molding of parts such as a usual IC fixed to a lead frame.
In the case that connection between the electrode pins and the electric circuits is firmly fixed by soldering, moreover, there would be a risk of solder cracks due to residual stresses.
Furthermore, in order to obtain a strong connection between the electrode pins and the electric circuits, connection lengths are required to some extent. If such a construction of longer connection lengths is employed in an ignition device originally having a small volume, the ignition device becomes unavoidably bigger causing a problem that a gas generator having the ignition device built therein would also become bigger.

The invention has been developed in view of the circumstances described above and has an object to provide an ignition device having the construction incorporating electric circuits therein, which is able to effectively shield the internal electric circuits from the electro-magnetic noise and the like. Moreover, the invention has another object to provide an ignition device ensuring passage of electric current into the electric circuits built in the ignition device without lowering the productivity in manufacturing the resin mold and without increasing the size of the ignition device.
Furthermore, the invention has a further object to provide a gas generator for an air bag including the ignition device described above installed therein which is compact and has a high shielding performance from electro-magnetic noise and the like described above.

### SOLUTION FOR THE TASK

By the way, first, the inventors of the present application have investigated means for cutting off the electro-magnetic noise and the like in order to prevent electric circuits incorporated in the ignition device from malfunctioning.
As a result, they have had a knowledge that the interior of an ignition device is effectively shielded and the ignition device itself can be electrically grounded through a gas generator by covering the environment of internal electric circuits with a metal cup which is integrated with a metal header provided on its periphery with a flange which is connected to a housing of an installation body (for example, an inflator) of the ignition device.
Moreover, the inventors have had another knowledge that by connecting the flange to the housing by caulking, the flange can be rigidly fixed to the installation body, and the fixation can sufficiently withstand the pressure upon operation of the gas generator.

Further, the inventors have earnestly investigated a connecting method between electrode pins and electric circuits and have gotten the following recognitions.
a) By molding only the circuits of an ASIC and the like except for the electrode pins of the header, the manufacture of the resin mold can be performed with a high productivity.
b) The connection between the electrode pins and the electric circuits in the resin mold is effected by contact therebetween through communication electrodes provided in the resin mold. With this arrangement, the connection between the electrode pins and the electric circuits becomes easy, and in addition the volume of the ignition device is kept to the minimum.

However, it has become apparent that in the event that the electrode pins of the header are pushed to the communication electrodes provided in a resin mold by a force to an extent in slight contact with each other, the connection between the communication electrodes and the electrode pins would be often broken down upon the ignition device being shocked.
With that, the inventors have continued the investigation and found the following facts.
c) In the case that the cup and the header of the ignition device are jointed together to form an integrated unit by welding, if the welding is performed in a state that the header has been forced into the cup of the ignition device at a pressure higher than a certain constant pressure, the communication electrodes and the electrode pins are jointed to each other under pressure owing to elastic reaction force of the cup and the resin mold enclosing the electric circuits. With such a joint formed under pressure, even if the ignition device is subjected to a considerable impact, the connection between the communication electrodes and the electrode pins is never disconnected.
d) With such a joint under pressure, further, since the elastic reaction force of the resin mold and the cup also acts between ignition charge and the heating element, the heating element provided at the other end of the resin mold and the ignition charge are jointed under pressure, thereby achieving a reliable ignition and shortening of the ignition time.
The invention is based on the recognition and knowledge described above.

Therefore, the aspects of the invention are as follows.
(1) The ignition device including a metal cup and a metal header for holding a plurality of electrode pins respectively insulated and closing the opening of said cup to integrate the header in said cup, and further including, in said cup, ignition charge, an ASIC, a capacitor, and a heating element, said ASIC being electrically connected to said electrode pins, said capacitor and said heating element, respectively, and said heating element abutting against said ignition charge, characterized in that said header comprises on its outer periphery a metal flange for fixing the header to an installation body of the ignition device.

(2) The ignition device as in the above (1), characterized comprising an ASIC component including said ASIC and said capacitor both mounted on a substrate molded with a resin to form a resin mold, said resin mold having at its top the heating element connected to said ASIC and at the bottom communication electrodes for connecting said ASIC to said electrode pins.

(3) The ignition device as in the above (2), characterized in that said electrode pins and said communication electrodes are jointed to each other under pressure.

(4) The ignition device in any one of the above (1) to (3), characterized in that said heating element and said ignition charge are in contact with each other under pressure.

(5) The ignition device in any one of the above (1) to (4), characterized in that the upper surface of said heating element is coated with an ignition charge composition.

(6) The ignition device in any one of the above (1) to (5), characterized in that said heating element comprises a semiconductor bridge chip.

(7) The ignition device in the above (6), characterized in that said semiconductor bridge chip includes a bridge formed by laminating a metal and an insulator.

(8) The gas generator for an air bag, characterized in that said flange provided on the ignition device in any one of the above (1) to (7) is electrically connected and fixed to a metal section of the installation body of the ignition device provided in said gas generator by means of caulking or welding.

(9) The gas generator for a seat belt pretensioner, characterized in that said flange provided on the ignition device in any one of above (1) to (7) is electrically connected and fixed to a metal section of the installation body of the ignition device provided in said gas generator by means of caulking or welding.

### EFECT OF THE INVENTION

The effects of the invention can be enumerated as follows.
(1) The electric circuits in the ignition device can be effectively shielded from external electro-magnetic noise and electro-magnetic induction so that any malfunctioning of the internal electric circuits and hence erroneous ignition can be prevented.
(2) The ignition device can be firmly fixed to an installation body and can sufficiently withstand the pressure when the gas generator is operated.
(3) As a resin is not used for fixed portions, even if the installation body is exposed to high temperatures, there will be little, if any, softening by heat so that no burst occurs and degree of safety becomes higher.
(4) Since the molding with a resin is limited to the electric circuits such as the ASIC and the like, the productivity of resin mold is improved.
(5) One step in the production process of the ignition device can be omitted because external molding of the ignition device is not required, whereby the ignition device can be inexpensively manufactured.

Further, the following effects can be obtained by the preferable aspects according to the invention.
(6) The joint of the electric circuits and the electrode pins is carried out by jointing the communication electrodes provided at the bottom of the resin mold and the electrode pins under pressure so that the ignition device itself becomes compact and its assembling is simplified.
(7) Since the communication electrodes and the electrode pins are jointed under pressure, even if the ignition device is subjected to a considerable impact, the connection between the communication electrodes and the electrode pins is never disconnected.
(8) Owing to the jointing under pressure described above, the heating element and the ignition charge are jointed under pressure, thereby achieving a reliable ignition and shortening of the ignition time.

### BRIEF DESCRIPTION OF THE DRAWINGS

Figure 1 is a sectional view of a preferable ignition device according to the invention;
Figure 2 is an explanatory view of an ignition charge of a two-layer structure;
Figure 3 is an explanatory view of the case of a heating element the upper surface of which is coated with an ignition charge composition;
Figure 4 is a view illustrating how to mount the ignition device onto an inflator;
Figure 5 is a conceptual view of a gas generator for an air bag;
Figure 6 is a conceptual view of a gas generator for a seat belt pretensioner; and
Figure 7 is an explanatory view of a central control unit.

### DESCRIPTION OF THE REFERENCE NUMERALS

- 1: Cup
- 2: Ignition charge
- 2': Booster charge
- 2": Ignition charge composition
- 3: ASIC component
- 4: ASIC
- 5: Capacitor
- 6: Heating element
- 7: Communication electrode
- 8: Header
- 9: Electrode pin
- 10: Glass to metal sealing
- 11: Flange
- 12: Ignition electrode
- 13: Housing
- 21: Gas generator for air bag
- 22: Ignition device
- 23: Enhancer
- 24: Gas generant
- 25: Filter
- 26: Outer vessel
- 27: Hole
- 31: Gas generator for seat belt pretensioner (micro gas-generator)
- 32: Ignition device
- 33: Gas generant
- 34: Base (holder)
- 35: Cup
- 110: Central control unit
- 111a to 111d: Air bag modules
- 114, 115: Electrode pins

### BEST MODE FOR CARRYING OUT THE INVENTION

The invention will then be specifically explained.

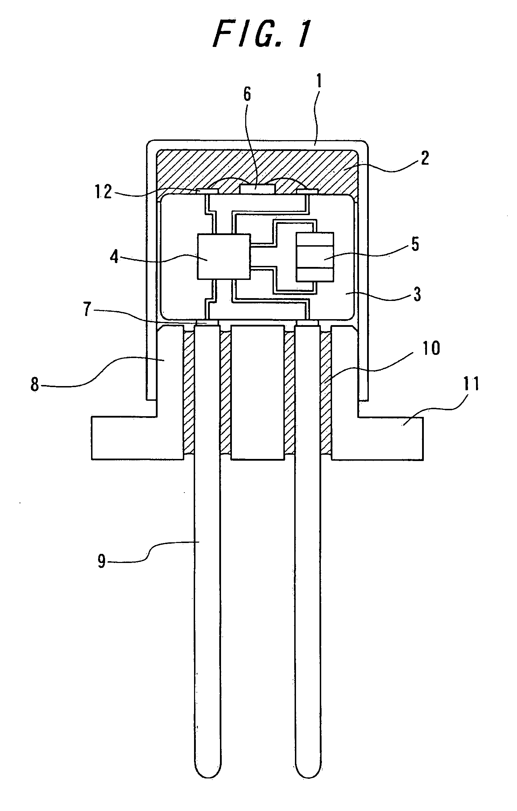

Figure 1 illustrates in section the ignition device according to the invention. In the drawing, reference numeral 1 shows a metal cup, and reference numeral 2 denotes ignition charge. Reference numeral 3 denotes an ASIC component which is formed by molding with a resin a substrate having elements required for electric circuits such as an ASIC, a capacitor and the like mounted thereon. Reference numeral 4 denotes the ASIC, and numeral 5 shows the capacitor. In this place, the ASIC (application specific integrated circuit) 4 is an integrated circuit for a particular use, which functions as intercommunication switching means in the present invention for igniting the ignition device based on coded information obtained by intercommunicating with the external. Moreover, the capacitor 5 serves as electric energy-accumulating means. Further, reference numeral 6 denotes a heating element arranged on the top of the ASIC component 3, and reference numeral 7 denotes communication electrodes arranged at the bottom of the ASIC component 3. As the substrate for the ASIC component 3, moreover, a lead frame may be used.

Reference numeral 8 shows a metal header to which electrode pins 9 are fixed by means of glass to metal sealing 10 for electrically connecting the electric circuits to the external. The electrode pins are fixed by the glass to metal sealing in this manner to ensure electric insulation while maintaining high air tightness. Furthermore, the metal cup and the metal portion of the header are welded to each other to seal the interior of the cup in high air tightness. A metal flange 11 is provided on the outer periphery of the header 8. Preferable examples of metals for the flange include iron families, for example, stainless steel, nickel-iron, nickel-plated SPC and the like.

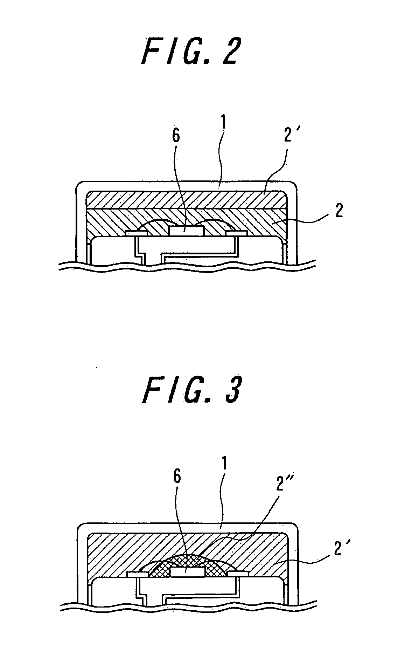

And now, first, the ignition charge 2 is arranged at the innermost portion in the cup 1 according to the invention. As shown in Figure 1, the ignition charge 2 may be of one kind of explosive arranged in a single layer, but as shown in Figure 2, it is more beneficial to arrange booster charge 2' of stronger in inflammation on the outside of the ignition charge 2 so as to form a two-layer structure.
As the booster charge 2', here, it is preferable to contain zirconium in its composition. Other than this, those containing titanium hydride, boron or lead trinitroresorcinate are also advantageously suitable.
Moreover, as usable ignition charges 2 other than those described above, there are, for example, those disclosed in the specification of Japanese Patent Application No. 2001-140,468 and the official gazette of Japanese Patent Application Opened No. 2002-362,992. Ignition charges are not particularly limited for this purpose.
The heating element 6 is arranged so as to be in contact with the ignition charge 2.
On this occasion, the upper surface of the heating element 6 is preferably coated with an ignition charge composition 2" as shown in Figure 3 which is beneficial for more stabilizing the contact between the heating element and the ignition charge.

A so-called SCB chip as such a heating element 6 is favorably suitable, which makes it possible to ignite the powder with low energy. Moreover, it is more advantageous to make such an SCB chip into the form of a bridge structure by laminating metals and insulators because large sparks occur with low energy. In this place, the "SCB" means a semiconductor bridge which is a heating element produced by the use of the manufacturing process for usual semiconductor integrated circuits.

As the bridge structure described above, it is also possible to apply a structure formed by alternately laminating one or more compositions selected from a group consisting of titanium, a nickel chrome alloy, nickel, aluminum, magnesium and zirconium, and one or more compositions selected from a group consisting of calcium, manganese, silicon dioxide and silicone.
A structure formed by alternately laminating titanium and SiO₂ (or boron) on a silicone substrate is advantageously suitable as a preferable bridge structure. Thicknesses of the respective layers are preferably of the order of 0.05 to 10 µm and more preferably of 0.1 to 4 µm.
Furthermore, an electrical connection of the heating element 6 is effected through ignition electrodes 12 provided on the upper surface of the ASIC component 3.

Built in the ASIC component 3 according to the invention are the ASIC 4 as means for the intercommunication and triggering particular electric pulse strings, and the capacitor 5 as means for accumulating the electric energy. Moreover, the ASIC component 3 is integrated through the two electrode pins 9 into an air bag system later described which is linked to a local area network (LAN) and communicating with a central control unit.

Furthermore, it is necessary for the ASIC component 3 to be smoothly inserted into the cup 1 by forming the ASIC component 3 as a cylindrical shape of a size matching with the inner diameter of the cylindrical cup 1. For this purpose, the outer diameter of the ASIC component 3 is preferably of the order of 85 % to 99 % of the inner diameter of the cup.

The diameter of the communication electrodes 7 arranged at the bottom of the ASIC component 3 is preferably somewhat smaller than the diameter of the electrode pins 9 so that even if contact positions of the communication electrodes 7 and the electrode pins 9 are somewhat shifted to each other owing to assembling errors or the like, these electrodes 7 and the pins 9 can be always maintained in jointed or connected states, thereby enabling the electrical connections between them to be maintained.
It is moreover beneficial that the contact portions of the communication electrodes 7 and the electrode pins 9 are flat to ensure stable contact between them when they are strongly pushed to each other.

According to the invention, after the cup 1 is packed with the ignition charge 2 at the innermost portion of the cup, the ASIC component 3 is inserted into the cup such that the heating element 6 arranged at the top of the ASIC component 3 abuts against the ignition charge 2. Then, after the header 8 is inserted into the cup 1 such that the electrode pins 9 provided in the header 8 abut against the communication electrodes 7 arranged at the bottom of the ASIC component 3, the cup 1 and the header 8 are integrated with each other by welding.

In this manner, the interior of the ignition device including the ASIC is covered with the electrically conductive metal body and fixed in a gas generator through the flange, thereby enabling effective shielding of the device from electro-magnetic noise and the like.
Moreover, the cup 1 and the header 8 are integrated with each other by means of welding so that the air tightness in the cup can be securely held.
Furthermore, as the whole ignition device is covered with the metal body, even if the gas generator is exposed to high temperatures upon encountering a fire or the like during its transportation, safety is ensured without burst.
In contrast therewith, with the ignition devices of the prior art, since the insulation is kept by a plastic material, upon encountering a fire the plastic portions are unavoidably softened so that when a gas generant acts, there is a possibility that parts will be blown away in all directions by the inner pressure. With such prior art devices, in order to preclude this, particular measures have been needed.

In welding the cup 1 and the header 8 to be integrated, it is preferable to carry out the welding under the state that the header 8 has been press-fitted in the cup 1.
Namely, when the welding is effected in the state that the enheader 8 has been forced into the cup 1 at a pressure higher than a certain constant pressure, the communication electrodes 7 and the electrode pins 9 are jointed together under pressure by the elastic reaction force caused by the ASIC component 3 molded with the resin and the cup 1. As a result, even when the ignition device is subjected to an impact with a substantial force, any disconnection between the communication electrodes 7 and the electrode pins 9 can be effectively prevented.

In the case that the communication electrodes 7 and the electrode pins 9 are jointed together under the pressure as described above, the elastic reaction force of the ASIC component 3 and the cup 1 acts also in the opposite direction so that the heating element 6 provided on the opposite side of the ASIC component 3 is jointed to the ignition charge 2 under pressure, that is, to increase the density of the ignition charge 2, thereby achieving reliable ignition and effective shortening of the ignition time.
In comparison with the structure whose connection portions are fixed by soldering or welding, moreover, the jointing under pressure as described above has advantages that the operation for jointing is simple and easy, and a volume for jointing is hardly required.

In this place, the force for press-fitting the header 8 into the cup 1 is preferably of the order of 1 to 250 MPa. If the force is less than 1 MPa, a pushing force sufficient to joint the communication electrodes 7 and the electrode pins 9 is not obtained, while if the force is more than 250 MPa, the stress applied to the ASIC component becomes too large so that there is a risk of breakage of the ASIC component. The more preferable force for press-fitting is 2 to 130 MPa.

As shown in Figure 3, according to the invention the upper surface of the heating element 6 may be previously coated with the ignition charge composition 2". In other words, the ignition charge in a slurry state is dispensed or applied to the upper surface of the heating element 6 and then dried. As compared with the case that the ignition charge in a powder state is merely packed, the dried ignition charge composition 2" is more stable in the contact with the heating element to effectively contribute to the reliable ignition and shortening of the ignition time.

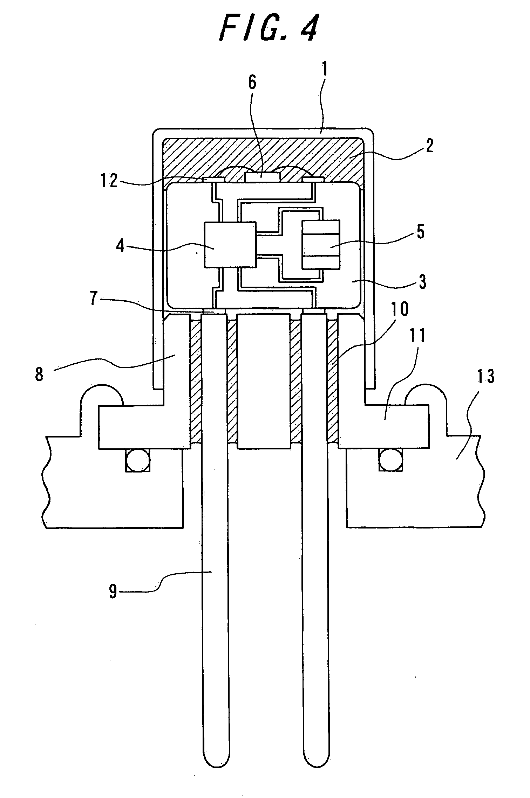

In the case that the ignition device according to the invention is arranged in an installation body, for example, in an inflator, it is desirable to joint the flange 11 directly to a housing 13 of the inflator by the use of caulking as shown in Figure 4. In addition, welding is also advantageously used for the jointing other than the caulking described above.
The reasons for employing the jointing method described above lie in the fact that the interior of the ignition device is effectively shielded and the ignition device itself can be electrically grounded through the inflator.

With the ignition device according to the invention, the ASIC component 3 can be arranged in the header 8 and the cup 1 which are held in an airtight state, and further the electrical connection between the communication electrodes 7 and the electrode pins 9 can be kept by the contact between them, so that although the ASIC component 3 is loaded in the device, the overall size of the ignition device 1 can be kept nearly to the sizes of prior art ignition devices.
Moreover, the ignition device according to the invention can communicate with the exterior (for example, a central control unit) by the use of the ASIC 4 as intercommunication switching means and the capacitor 5 as electric energy-accumulating means both built in the ASIC component 3.

Accordingly, if such an ignition device described above is used in each of air bag modules, for example, incorporated in a car and connected to a central control unit through an air bag system linked to a local area network (LAN), it becomes possible for the central control unit to ignite only a required air bag module upon collision, while particular electric energy for igniting such an ignition device need no longer be transmitted.
These functions and effects are achieved especially by providing the capacitor 5 in each of ignition devices for accumulating faint energy contained in voltage signals generated from the central control unit, using the SCB chip as the heating element 6 which causes ignition charge to be ignited with lower energy than those with the prior art, and providing the ASIC 4 as intercommunication and switching means which detects coded information transmitted from the central control unit and in turn transmits command for sending the state of the ignition device.

In the invention, moreover, the term "coded information" used in the intercommunication with the central control unit is intended to mean both the information including a command for igniting each of the ignition devices and the information concerning states of electronic elements included in each of the ignition devices to be transmitted to the central control unit.

A gas generator for an air bag using the ignition device according to the invention will then be explained.

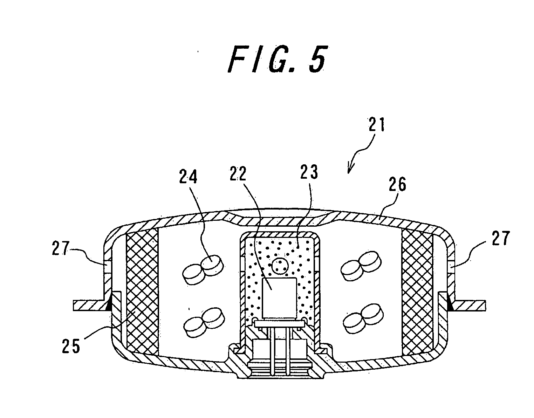

Figure 5 is a conceptual view of a gas generator for an air bag. As shown in Figure 5, the gas generator 21 for the air bag comprises therein an ignition device 22, an enhancer 23, gas generant 24, and filters 25, and outside the generator an outer vessel 26 withstanding the pressure when the gas generant 24 is burned. The outer vessel 26 is formed with holes 27 for discharging the generated gas into the air bag.
When the ignition device 22 is actuated, the enhancer 23 burns by heat energy produced from the ignition device 22 to generate a hot gas by means of which the gas generant 24 is burned to generate a gas for inflating the air bag. The generated gas is discharged out of the outer vessel 26 through the holes formed in the outer vessel 26. At this time, the gas passes through the filters 25 so that residues of the burned gas generant are collected at the filters and the gas itself is cooled simultaneously.
Although the ignition device according to the invention includes the communication circuit comprising the ASIC, the ignition device is similar in size to the prior art ignition devices as described above. Therefore, the gas generator for an air bag using the ignition device according to the invention is effectively compact and has a size almost similar to sizes of prior art gas generators. Moreover, since the SCB is used as a heating element, ignition occurs in a short period of time so that delay in ignition due to the communication can be prevented.

Moreover, a gas generator for a seat belt pretensioner using the ignition device according to the invention will be explained.

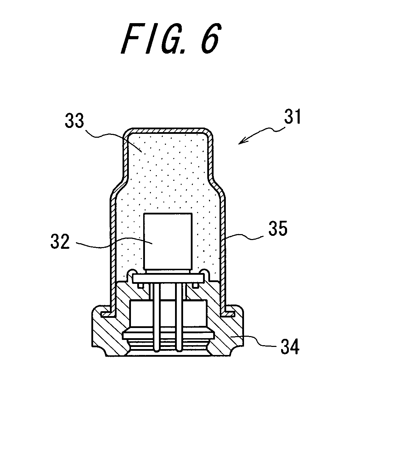

Figure 6 is a conceptual view illustrating the gas generator (micro gas-generator) for a seat belt pretensioner. As shown in Figure 6, the micro gas-generator 31 comprises therein an ignition device 32 and a gas generant 33. The ignition device 32 is fixed to a metal base 34 called a holder. Further, a cup 32 for storing a gas generant 33 therein is also fixed to the holder by means of, for example, caulking. When the ignition device 32 is actuated, the gas generant 33 in the cup 35 is burned by the heat coming from the ignition device 32 to generate a gas.
The ignition device according to the invention is compact, although it has the communication circuit comprising the ASIC as described above. Therefore, by using the ignition device, it is also possible to provide the micro gas-generator which is compact and has a size almost similar to sizes of the prior art gas generators. Similarly, by using the SCB as a heating element, ignition occurs in a short period of time so that delay in ignition due to the communication can be prevented.

The igniting operation of the ignition device according to the invention will then be explained.
Under a normal condition, that is, for example, when a car does not encounter any accident requiring the development or expansion of an air bag having the ignition device 1 incorporated therein, the capacitor as electric energy-accumulating means is under a condition accumulating the energy according to communication signals sent from the central control unit.

Here, when the ignition device 1 is requested to operate by impact caused by an accident or the like, the central control unit transmits an ignition command in the form of a particular electric pulse string to the ASIC component 3 in the ignition device. In the ASIC component, at this moment the accumulated electric energy is discharged from the capacitor 5 to the heating element 6 by means of the electronic switch. The heating element 6 causes the ignition charge 2 to start its ignition with the aid of the electric energy from the capacitor 5.

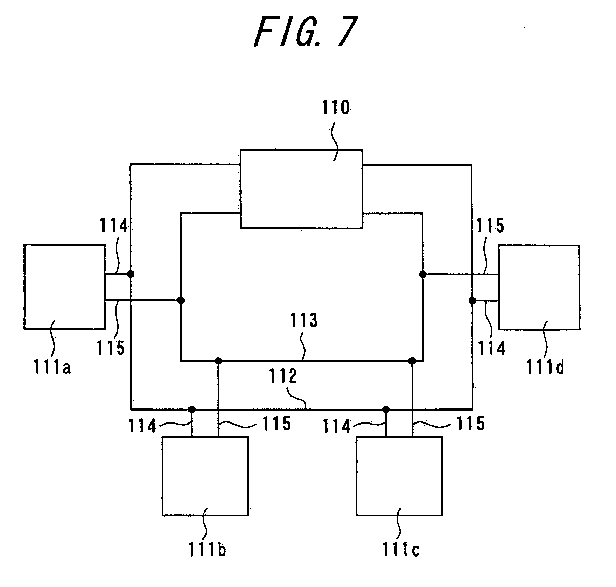

The control procedure by the central control unit will then be explained. Figure 7 illustrates an example of the air bag system linked to a local area network (LAN) and integrated with the central control unit 110 and four air bag systems 111a, 111b, 111c and 111d. The two air bag modules 111b and 111c each may have a gas generator for inflating, for example, a front air bag, while the other two air bag modules 111a and 111d each may have a gas generator for inflating, for example, a side air bag.

The ignition device is put in the gas generator included in each of these modules. Each of the ignition devices has two electrode pins 114 and 115, the former electrode pins 114 being connected to a first electric-supply conductor 112 connected to the central control unit 110, and the latter electrode pins 115 being connected to a second electric-supply conductor 113 connected to the central control unit 110.

Under a normal condition, that is, when a car does not encounter a particular accident requiring activation of one or more air bag modules 111a, 111b, 111c and 111d, the central control unit 110 periodically gives the electric-supply conductors 112 and 113 low electric current which is fed through the electrode pins 114 and 115 to the electric energy storing means (capacitors) of the ignition devices included in the four air bag modules 111a, 111b, 111c and 111d, respectively.

In the event that for example, upon impact, the activation of the air bag module 111c is desired, the central control unit 110 feeds a particular electric pulse string constituting an ignition command for the ignition device of the air bag module 111c to the first electric-supply conductor 112. Although the particular electric pulse string is fed to each of the ignition devices through the electrode pins 114 and 115, only the intercommunication means included in the ignition device of the air bag module 111c responds to the command to activate the electric energy-accumulating means associated with the ignition switching means, thereby activating the ignition charge in the manner described above.

Following the impact, if it is desired to activate some air bag modules, for example, the air bag modules 111a and 111b, the central control unit 110 gives the first electric-supply conductor 112 a particular electric pulse string for each of the ignition devices included in the air bag modules 111a and 111b, respectively. The two ignition devices operate in the same manner as described above.

## Claims

1. An ignition device including a metal cup and a metal header for holding a plurality of electrode pins respectively insulated and closing the opening of said cup to integrate the header in said cup, and further including, in said cup, ignition charge, an ASIC, a capacitor, and a heating element, said ASIC being electrically connected to said electrode pins, said capacitor and said heating element, respectively, and said heating element abutting against said ignition charge, **characterized in that** said header comprises on its outer periphery a metal flange for fixing the header to an installation body of the ignition device.

2. The ignition device as claimed in claim 1, **characterized** comprising an ASIC component including said ASIC and said capacitor both mounted on a substrate molded with a resin to form a resin mold, said resin mold having at its top the heating element connected to said ASIC and at the bottom communication electrodes for connecting said ASIC to said electrode pins.

3. The ignition device as claimed in claim 2, **characterized in that** said electrode pins and said communication electrodes are jointed to each other under pressure.

4. The ignition device in any one of claims 1 to 3, **characterized in that** said heating element and said ignition charge are in contact with each other under pressure.

5. The ignition device in any one of claims 1 to 4, **characterized in that** the upper surface of said heating element is coated with an ignition charge composition.

6. The ignition device in any one of claims 1 to 5, **characterized in that** said heating element comprises a semiconductor bridge chip.

7. The ignition device in claim 6, **characterized in that** said semiconductor bridge chip includes a bridge formed by laminating a metal and an insulator.

8. A gas generator for an air bag, **characterized in that** said flange provided on the ignition device as claimed in any one of claims 1 to 7 is electrically connected and fixed to a metal section of the installation body of the ignition device provided in said gas generator by means of caulking or welding.

9. A gas generator for a seat belt pretensioner, **characterized in that** said flange provided on the ignition device as claimed in any one of claims 1 to 7 is electrically connected and fixed to a metal section of the installation body of the ignition device provided in said gas generator by means of caulking or welding.
